Europäisches Patentamt

European Patent Office

Office européen des brevets

(19)

(11) **EP 1 523 170 A1**

(12) **EUROPEAN PATENT APPLICATION**
published in accordance with Art. 158(3) EPC

(43) Date of publication:
**13.04.2005 Bulletin 2005/15**

(51) Int Cl.⁷: **H04N 1/393**

(21) Application number: **03810639.9**

(22) Date of filing: **07.11.2003**

(86) International application number:
**PCT/JP2003/014172**

(87) International publication number:
**WO 2004/043056 (21.05.2004 Gazette 2004/21)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **08.11.2002 JP 2002325912**

(71) Applicant: **MATSUSHITA ELECTRIC INDUSTRIAL CO., LTD.**
**Kadoma-shi, Osaka 571-8501 (JP)**

(72) Inventors:
• **GODA, Yoichi**
  **Kashima-gun, Ishikawa 929-1637 (JP)**
• **KAYADA, Tadashi**
  **Yokohama-shi, Kanagawa 236-0042 (JP)**

(74) Representative: **Schuster, Thomas, Dipl.-Phys.**
**Grünecker, Kinkeldey, Stockmair & Schwanhäusser**
**Anwaltssozietät**
**Maximilianstrasse 58**
**80538 München (DE)**

(54) **IMAGE CONVERSION DEVICE, IMAGE CONVERSION METHOD, AND RECORDING MEDIUM**

(57) An image transformation apparatus, image transformation method and recording medium which carries out contraction processing on image data stored in an image memory. For contracting an image, an image transformation apparatus (100) is provided with a contraction work memory (115a) capable of storing an amount of data of one unit block before contraction, a contraction work column memory (115b) capable of storing one column of the unit block and a contraction work line memory (115c) capable of storing data corresponding to one line of the image after contraction.

FIG.6

**Description**

Technical Field

The present invention relates to an apparatus and method for image transformation which processes image data stored in an image memory, and a recording medium.

Background Art

Conventionally, there are various proposals on a method for resolution transformation from low resolution information to high resolution information. These conventionally proposed methods vary in the transformation processing method depending on the type of a target image (e.g., multi-value image having gradation information in each pixel, binary image binarized through pseudo-halftone processing such as dithering method and error diffusion method, binary image binarized using a fixed threshold, character image, etc.)

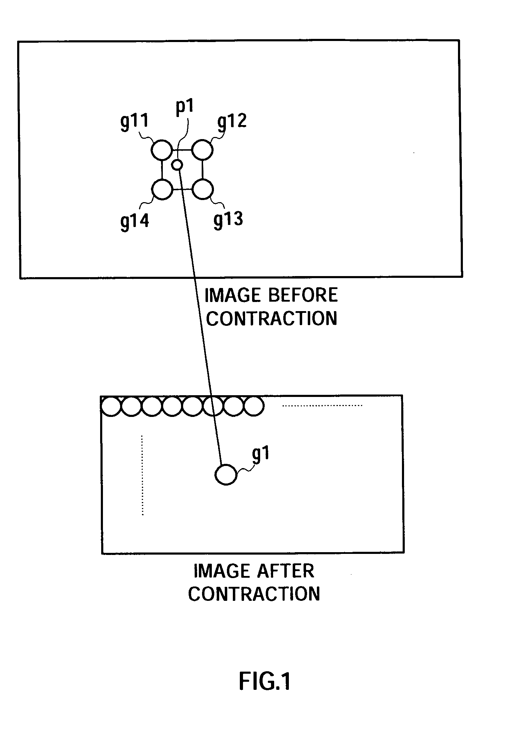

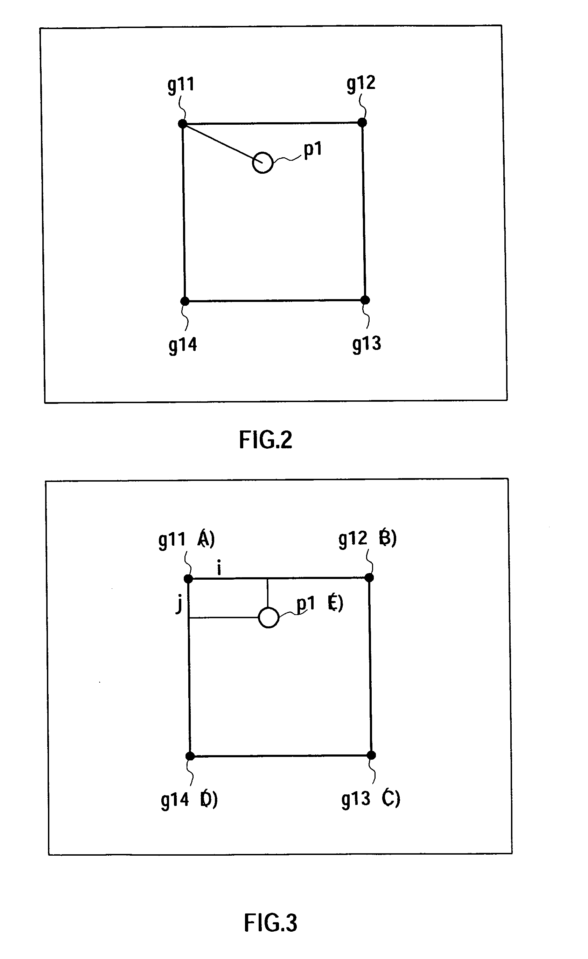

For example, FIG.1 is a schematic diagram showing a conventional resolution transformation method called an "interpolation method" and this interpolation method examines, in a multi-value image such as a natural image, to which part of an image before contraction a pixel g1 after contraction corresponds, uses four pixels g11, g12, g13 and g14 neighboring the point (interpolation point) p1 and generally uses a nearest-neighbor interpolation method which arranges the pixel value of a pixel g11 which is nearest to the interpolation point p1 as shown in FIG.2 or a bilinear interpolation method which determines a pixel value E of the interpolation point P1 from distances i and j among the four points g11, g12, g13 and g14 (suppose the pixel values of these four points are A, B, C and D) surrounding the interpolation point p1 and the interpolation point p1 as shown in FIG. 3 from the following calculation:

$$E = (1-i)(1-j)A + i(1-j)B + (1-i)jC + ijD \qquad \text{(Expression 1)}$$

On the other hand, as an international standardization scheme for color still image encoding, a JPEG (Joint Photographic Experts Group) scheme is defined. The JPEG scheme is a scheme which compresses image information through quantization of a transformation factor by a DCT (Discrete Cosine Transform) and through entropy encoding of the transformation factor after the quantization. This compression method performs compression in units of block, each block consisting of, for example, $8 \times 8$ pixels.

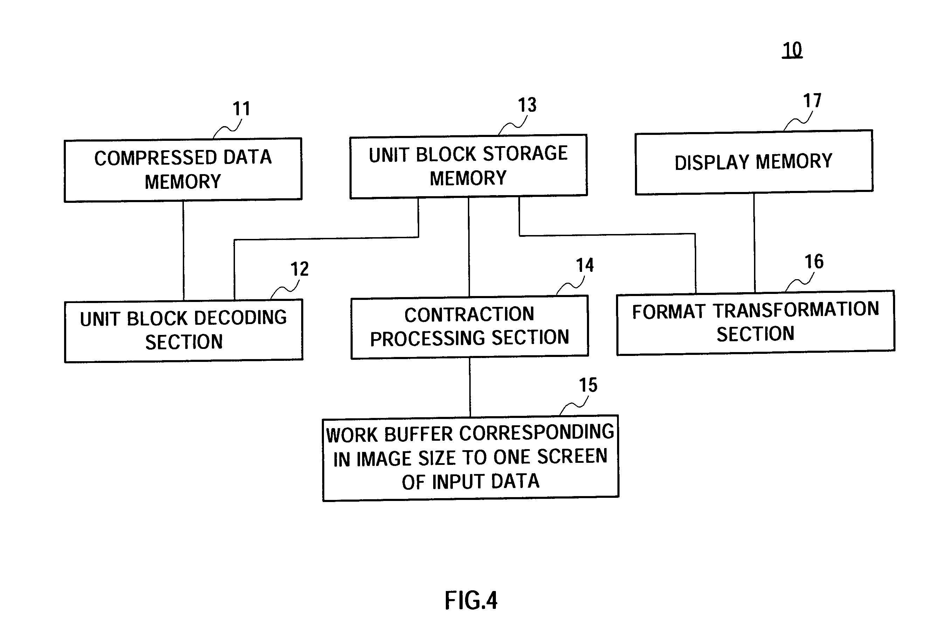

In order to perform resolution transformation on image data compressed according to, for example, a JPEG scheme using the aforementioned interpolation method, the conventional image transformation apparatus decodes all image data first and then performs resolution transformation in a configuration shown in FIG.4.

That is, as shown in FIG.4, in a conventional image transformation apparatus 10, a compressed data memory 11 stores compressed image data. A unit block decoding section 12 decodes JPEG data stored in the compressed data memory 11 for every $8 \times 8$ pixels which is a unit block and outputs the decoded JPEG data to a unit block storage memory 13. A contraction processing section 14 carries out contraction processing on the image data for each unit block output from the unit block decoding section 12 using a work buffer 15 corresponding in image size to one screen of the input data according to a bilinear interpolation method and writes it back in the unit block storage memory 13. A format transformation section 16 transforms the contracted image data processed by the contraction processing section 14 into a format of 5, 6 and 5 bits for RGB respectively and stores the transformed data in a display memory 17.

Thus, the conventional image transformation apparatus 10 is designed to perform contraction processing using the work buffer 15 corresponding in image size to one screen of the input data.

Furthermore, as another resolution transformation method, a method of performing resolution transformation by operating a base matrix used to carry out DCT processing in conformity to desired resolution is described, for example, in the Unexamined Japanese Patent Publication No.HEI 7-129759 (page 5).

However, since the conventional image transformation apparatus 10 (FIG.4) decodes all image data first and then performs resolution transformation, when the image size of the input compressed data increases, the memory necessary for decoding also increases, which involves a problem such as causing upsizing of the apparatus and a cost increase.

Furthermore, the method disclosed in the Unexamined Japanese Patent Publication No.HEI 7-129759 is designed to contract (or expand) an image by transforming an $8 \times 8$-pixel DCT factor into a $7 \times 7$-pixel DCT factor or $6 \times 6$-pixel DCT factor, but the problem of such a method is that it is not possible to perform arbitrary resolution transformation such as contracting 640×480-pixel image data to 639×479 pixels.

Disclosure of Invention

It is an object of the present invention to provide an excellent image transformation apparatus, image transformation method and recording medium for an apparatus requiring a contracted display by preventing a memory necessary for decoding from increasing even if the image size of input compressed data increases.

According to a mode of the present invention, an image transformation apparatus comprises a contraction processing section that carries out contraction processing on unit image data extracted for each predetermined unit block, for each unit thereof and the contraction processing section outputs the contracted image data subjected to the contraction processing and then performs the contraction processing on new unit image data.

According to another mode of the present invention, an image transformation apparatus comprises a compressed data memory that stores compressed image data, an image data unit block decoding section that decodes and outputs the image data stored in the compressed data memory for each unit, a unit block storage memory that stores the image data for each unit block output from the image data unit block decoding section, a contraction processing section that contracts the image data for each unit recorded in the unit block storage memory, a contraction processing memory that stores the contracted image data output from the contraction processing section, a work memory that stores temporary information of the contraction processing section, a format transformation section that transforms the contracted image data recorded in the contraction processing memory according to a display format and a display memory that stores the image data transformed according to the display format.

According to a further mode of the present invention, a terminal apparatus comprises an image transformation apparatus that carries out contraction processing on unit image data extracted for each predetermined unit block, for each unit thereof, outputs the contracted image data subjected to the contraction processing and then carries out the contraction processing on new unit image data.

The above described terminal apparatus preferably stores only contracted image data.

According to a still further mode of the present invention, an image transformation method comprises an image data unit block decoding step of decoding and outputting digitized image data for each unit, a contraction processing step of contracting image data for each unit obtained in the image data unit block decoding step and a format transforming step of transforming the contracted image data obtained in the contraction processing step according to a display format.

According to a still further mode of the present invention, a recording medium that stores an image transformation processing programcomprisesanimagedata unit block decoding step of decoding and outputting digitized image data for each unit, a contraction processing step of contracting image data for each unit obtained in the image data unit block decoding step and a format transforming step of transforming the contracted image data obtained in the contraction processing step according to a display format.

Brief Description of Drawings

FIG. 1 is a schematic diagram illustrating a method of contracting an image;
FIG.2 is a schematic diagram illustrating a nearest-neighbor interpolation method;
FIG. 3 is a schematic diagram illustrating a bilinear interpolation method;
FIG.4 is a block diagram showing a configuration of a conventional image transformation apparatus;
FIG.5 is a block diagram showing a configuration of a portable terminal apparatus including an image transformation apparatus according to an embodiment of the present invention;
FIG.6 is a block diagram showing a configuration of the image transformation apparatus according to the embodiment of the present invention;
FIG.7 is a schematic diagram illustrating the operation of the image transformation apparatus according to the embodiment of the present invention;
FIG.8 is a schematic diagram illustrating the operation of the image transformation apparatus according to the embodiment of the present invention;
FIG.9 is a schematic diagram illustrating the operationoftheimagetransformationapparatusaccording to the embodiment of the present invention;
FIG.10 is a schematic diagram illustrating the operation of the image transformation apparatus according to the embodiment of the present invention;
FIG.11 is a schematic diagram illustrating the operation of the image transformation apparatus according to the embodiment of the present invention;
FIG. 12 is a schematic diagram showing an image before and after contraction according to the embodiment of the present invention;

FIG.13 is a schematic diagram illustrating the operation of the image transformation apparatus according to the embodiment of the present invention;

FIG.14 is a schematic diagram illustrating the operation of the image transformation apparatus according to the embodiment of the present invention;

FIG.15 is a schematic diagram illustrating the operation of the image transformation apparatus according to the embodiment of the present invention;

FIG.16 is a schematic diagram illustrating the operation of the image transformation apparatus according to the embodiment of the present invention;

FIG.17 is a schematic diagram illustrating the operation of the image transformation apparatus according to the embodiment of the present invention;

FIG.18 is a schematic diagram illustrating the operation of the image transformation apparatus according to the embodiment of the present invention;

FIG.19 is a schematic diagram illustrating the operation of the image transformation apparatus according to the embodiment of the present invention;

FIG.20 is a schematic diagram illustrating the operation of the image trans formation apparatus according to the embodiment of the present invention;

FIG.21 is a flow chart illustrating an image transformation method according to the present invention; and

FIG.22 is a block diagram showing a configuration of a portable terminal apparatus according to another embodiment of the present invention.

Best Mode for Carrying out the Invention

An essence of the present invention is to carry out, when carrying out contraction processing on an input image, contraction processing and output the result thereof for each unit block and thereby prevent the size of a work memory necessary for contraction processing from increasing even if the image size of the input image increases.

With reference now to the attached drawings, embodiments of the present invention will be explained in detail below.

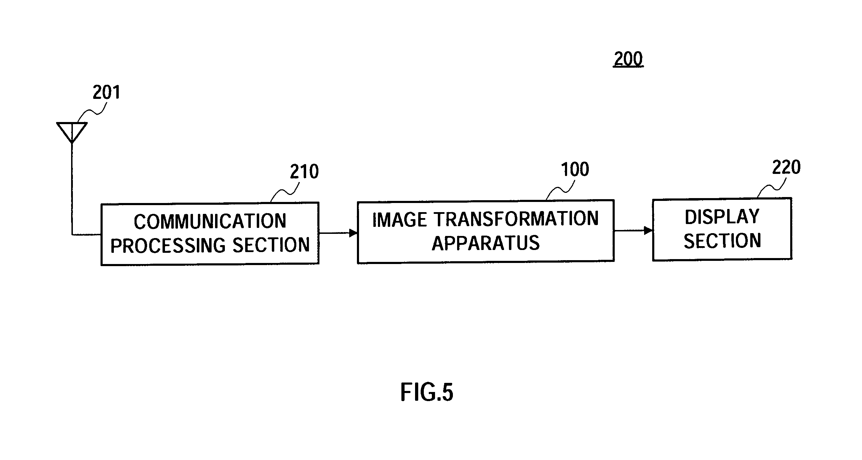

FIG.5 is a block diagram showing a configuration of a portable terminal apparatus 200 including an image transformation apparatus 100 according to this embodiment. This portable terminal apparatus 200 carries out reception processing such as frequency conversion and demodulation processing on a signal received via an antenna 201 at a communication processing section 210.

Compressed image data (hereinafter simply referred to as "compressed data") compressed according to, for example, a JPEG scheme included in the received signal demodulated by the communication processing section 210 is supplied to the image transformation apparatus 100.

The image transformation apparatus 100 decodes the compressed data, transforms the size of this decoded image data and displays the transformed image on a display section 220 made up of a liquid crystal display device, etc.

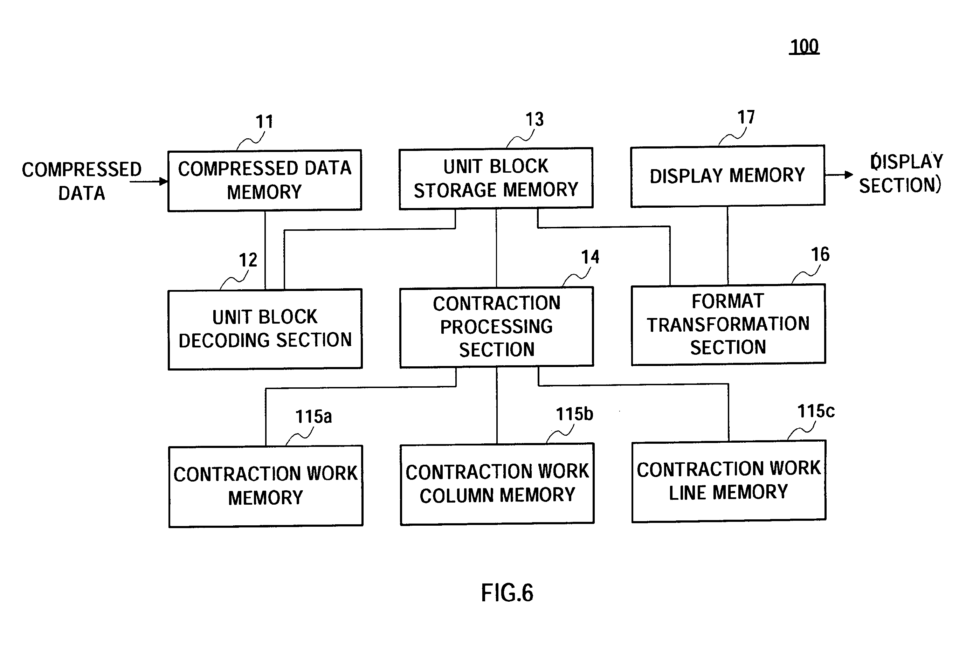

FIG.6 is a block diagram showing a configuration of the image transformation apparatus 100. In this FIG. 6, suppose the components corresponding to those in FIG.4 are assigned the same reference numerals.

The following explanation will assume a case where a compression format of compressed data is JPEG, a Y (brightness) component is the only component included, input $1280 \times 960$-pixel JPEG data is contracted to $320 \times 240$ pixels using a bilinear interpolation method and displayed in a format of 5, 6 and 5 bits for RGB respectively.

In FIG.6, a compressed data memory 11 stores compressed image data (compressed data). A unit block decoding section 12 decodes the compressed data (JPEG data) stored in the compressed data memory 11 for each $8 \times 8$-pixel unit which is a unit block and outputs the decoded data to a unit block storage memory 13. A contraction processing section 14 carries out contraction processing on the image data for each unit block output from the unit block decoding section 12 using a contraction work memory 115a, a contraction work column memory 115b and a contraction work line memory 115c according to a bilinear interpolation method and writes it back in the unit block storage memory 13. A format transformation section 16 transforms the contracted image data processed by the contraction processing section 14 into a format of 5, 6 and 5 bits for RGB respectively and stores the transformed data in a display memory 17. The display memory 17 outputs the stored image data to the display section 220 (FIG.5) at a predetermined timing.

Then, the operation of the image transformation apparatus 100 will be explained using the figure.

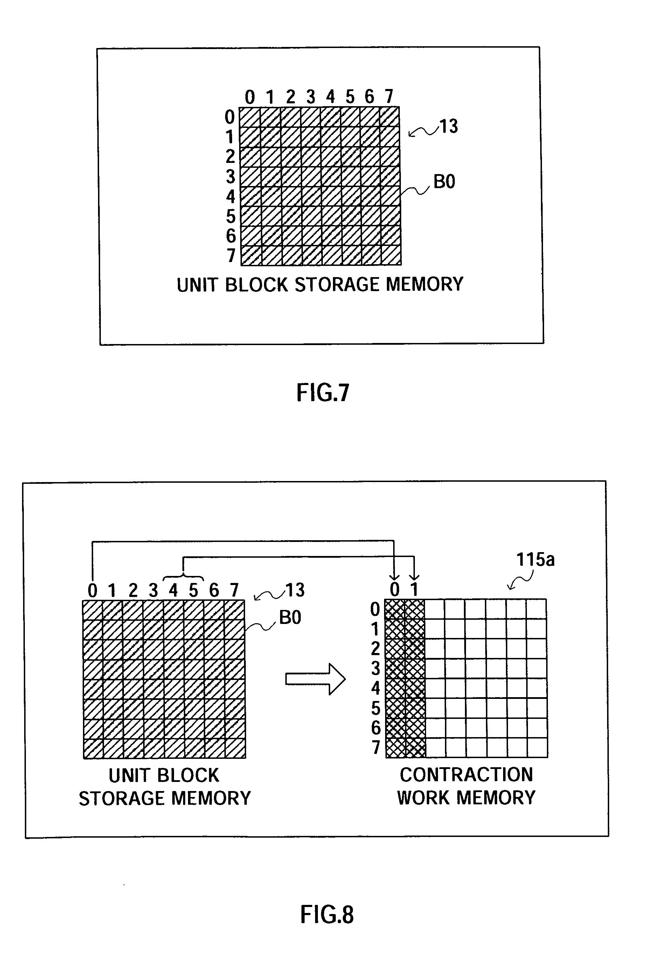

First, as shown in FIG.7, the unit block decoding section 12 decodes JPEG data stored in the compressed data memory 11 for every $8 \times 8$ pixels which is a unit block and outputs the decoded data to the unit block storage memory 13. Here, suppose a unit block B0 of $8 \times 8$ pixels shown in FIG.7 is a unit block at the top left of the image before contraction.

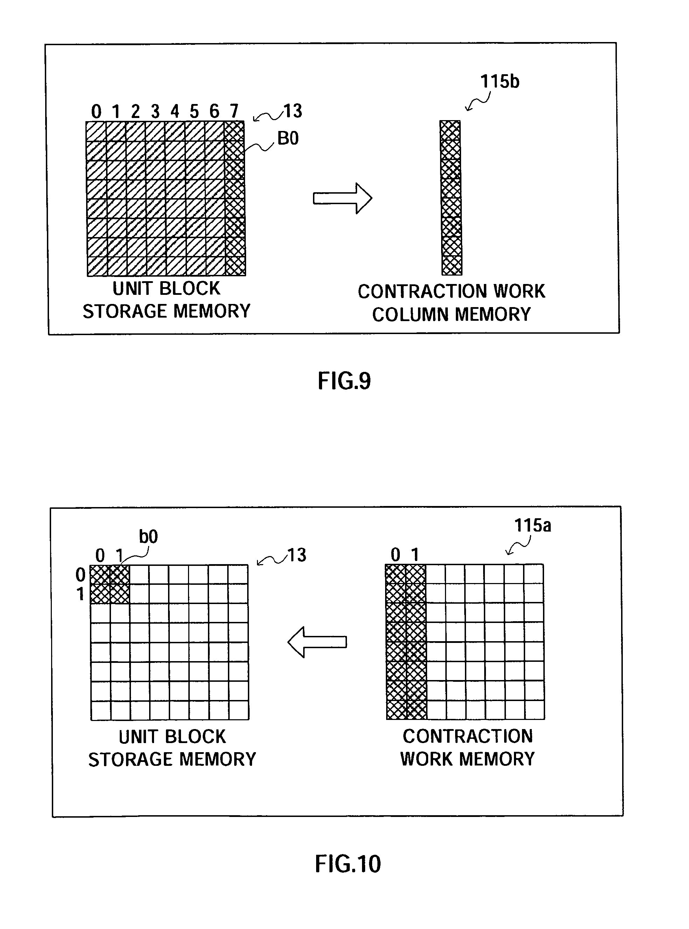

Then, as shown in FIG. 8, the contraction processing section 14 carries out contraction processing on the image data of the unit block B0 stored in the unit block storage memory 13 only in the horizontal direction wherever possible within the block using a bilinear interpolation method and stores the result in the contraction work memory 115a. In this case, since this is a contraction from 1280 × 960 pixels to 320 × 240 pixels, the contraction rate in the horizontal direction is 1279/319.

In this embodiment, when 1280 pixels are contracted to 320 pixels, the contraction rate is defined as a ratio of 1279 which is the number of gaps among 1280 pixels to 319 which is the number of gaps among 320 pixels. Therefore, when the number of pixels in the horizontal direction is contracted from 1280 pixels to 320 pixels, the contraction rate is defined as 1279/319.

Thus, the contraction rate in the horizontal direction is 1279/319 and within the unit block B0 of 8 × 8 pixels before contraction in this case, it is possible to output two columns in the vertical direction (hereinafter a column in the vertical direction will be simply referred to as "column") as shown below.

That is, the contraction rate in this contraction processing is 1279/319=4.009 and when the position of a column after contraction is assumed to be an nth column, the relationship between the position N of the column after contraction and the position n of the column before contraction is $(1279/319) \times n=N$. Therefore, as shown in FIG. 8, since the 0th column (n=0) after contraction stored in the contraction work memory 115a is $(1279/319) \times 0=0$, the result of interpolating the 0th column and 1st column before contraction stored in the unit block storage memory 13 with the weight 0 of the 1st column is used. That is, the 0th column before contraction is used as is for the 0th column after contraction.

Furthermore, since the 1st column (n=1) after contraction stored in the contraction work memory 115a is $(1279/319) \times 1=4.009$, the result of interpolating the 4th column and 5th column before contraction stored in the unit block storage memory 13 with the weight (decimal part of 1279/319) of the 5th column is used. Such an interpolation method is the bilinear interpol at ion method. Here, though this embodiment uses a bilinear interpolation method for contraction processing, it is also possible to use a nearest-neighbor interpolation method using the result of rounding the decimal part down or up instead of this bilinear interpolation method.

Thus, as shown in FIG.8, the result of contracting the unit block B0 of the unit block storage memory 13 in the horizontal direction is stored in the contraction work memory 115a.

Here, as shown in FIG.9, being necessary for the contraction processing of the block next to the unit block B0 (neighboring unit block B1 on the right of the unit block B0) subjected to contraction processing in the horizontal direction, the rightmost column of the unit block B0 before contraction stored in the unit block storage memory 13 is stored in the contraction work column memory 115b. Next, as shown in FIG.10, contraction processing only in the vertical direction wherever possible within the block is carried out on the contracted image data in the horizontal direction stored in the contraction work memory 115a using a bilinear interpolation method and the result is written back in the unit block storage memory 13. In this case, since the contraction is performed from 1280 × 960 pixels to 320 × 240 pixels, the contraction rate in the vertical direction is 959/239 and within the unit block B0 of 8 × 8 pixels, it is possible to output horizontal two lines as shown below. Here, a line in the horizontal direction will be simply referred to as a "line."

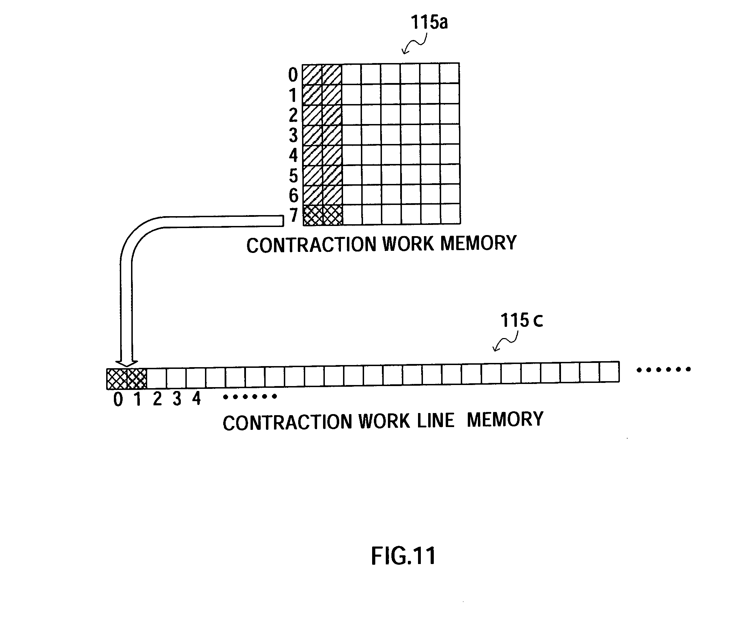

That is, the top line (0th line of the contracted image) after contraction (contraction unit block b0) becomes N=0 by substituting n=0 into the relationship between the position N of the line before contraction and the position n of the line after contraction $(959/239) \times n=N$ as in the case of the horizontal direction based on the contraction rate in the vertical direction, which is the result of interpolating the 0th line and 1st line before contraction with the weight 0 of the 1st line. Furthermore, the 1st line after contraction becomes N=4 .013 by substituting n=1 into the relationship between the position N of the line before contraction and the position n of the line after contraction $(959/239) \times n=N$, which is the result of interpolating the 4th line and 5th line before contraction with the weight (decimal part of 959/239) of the 5th line. Here, being necessary for contraction processing of the subsequent blocks as shown in FIG.11, the bottom line before contraction is stored in the contraction work line memory 115c.

Thus, the contraction unit block b0 which is contracted the first unit block B0 (FIG.7) is stored in the unit block storage memory 13. In this condition, the format transformation section 16 transforms the image data (contraction unit block b0) after contraction stored in the unit block storage memory 13 into an output format of 5, 6 and 5 bits for RGB respectively and stores the transformed data in the display memory 17.

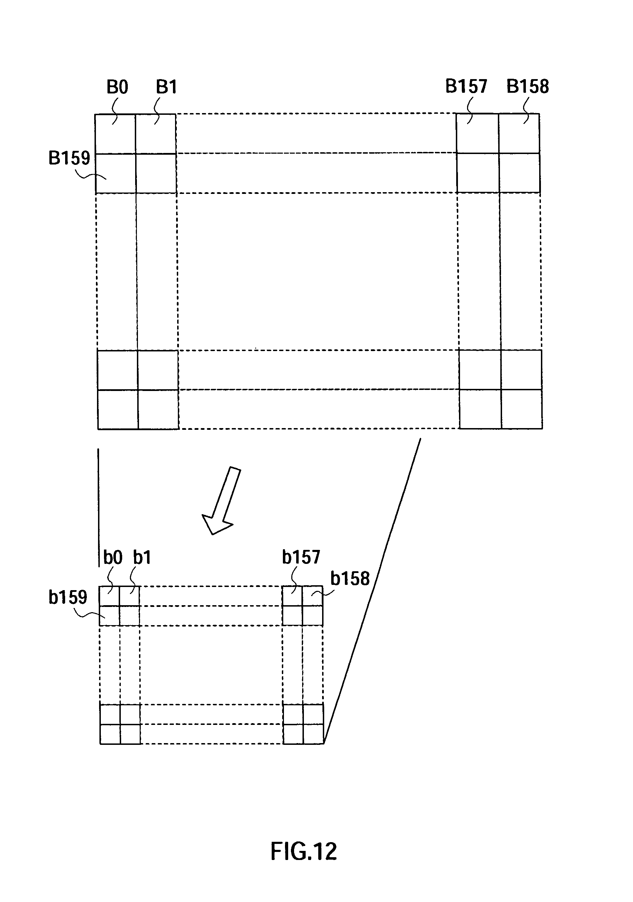

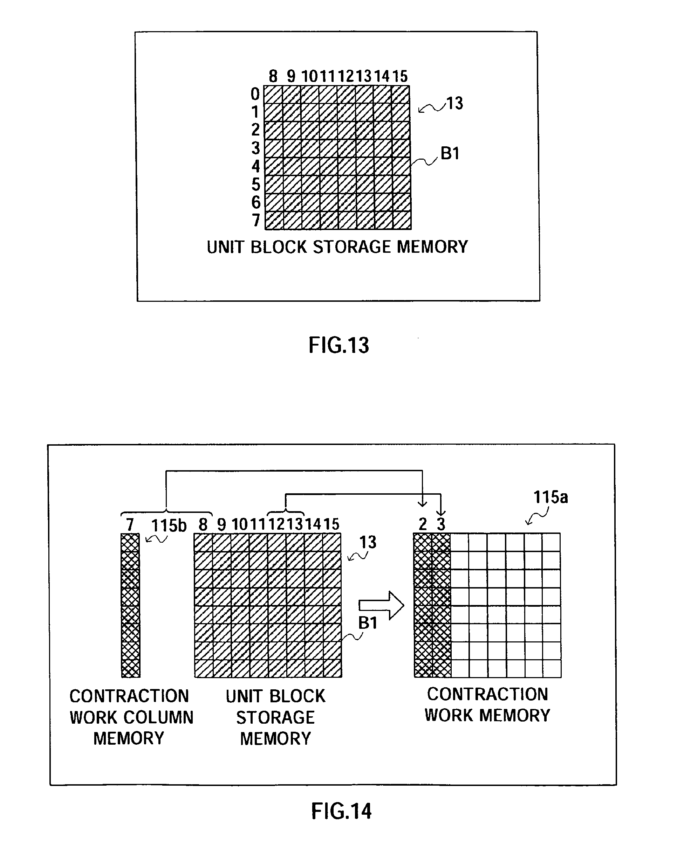

In this way, the contraction processing on the first unit block B0 is completed. Following this, as shown in FIG. 12, the image transformation apparatus 100 proceeds with contraction processing on a unit block B1 following the contracted unit block B0. In this case, as shown in FIG. 13, the unit block decoding section 12 (FIG. 6) decodes the compressed data (JPEG data) stored in the compressed data memory 11 and outputs the next unit block B1 of 8 × 8 pixels to the unit block storage memory 13. Then, as shown in FIG.14, the contraction processing section 14 carries out contraction processing only in the horizontal direction wherever possible within the block on the image data of the unit block B1 before contraction stored in the unit block storage memory 13 using a bilinear interpolation method and stores the result in the contraction work memory 115a.

Note that since the previous contraction result (contraction unit block b0) obtained from the first unit block B0 constructs the 0th column and the 1st column after contraction processing, the result of contraction processing on the unit block B1 before contraction processing this time constitutes the 2nd column and 3rd column after contraction processing. That is, N=8.019 is obtained by substituting n=2 into the relationship between the above described position N of the column before contraction and position n of the column after contraction (1279/319) $\times$ n=N based on the contraction rate in the horizontal direction and the data assigned to the 2nd column after this contraction processing is obtained by interpolating the 7th column (the rightmost column of the first unit block B0) before contraction and the 8th column (the leftmost column of the unit block B1 processed this time) using a bilinear interpolation method.

Furthermore, with regard to the 3rd column (FIG.14) after contraction processing, N=12.028 is obtained by substituting n=3 into the relationship between the position N of the column before contraction and the position n of the column after contraction (1279/319) $\times$ n=N and the data assigned to the 3rd column after contraction processing is obtained by interpolating the 12th column (the 5th column from the left of the unit block B1 processed this time) before contraction and the 13th column (the 6th column from the left of the unit block B1 processed this time) using a bilinear interpolation method. In this way, the unit block B1 is also subjected to contraction processing in the horizontal direction.

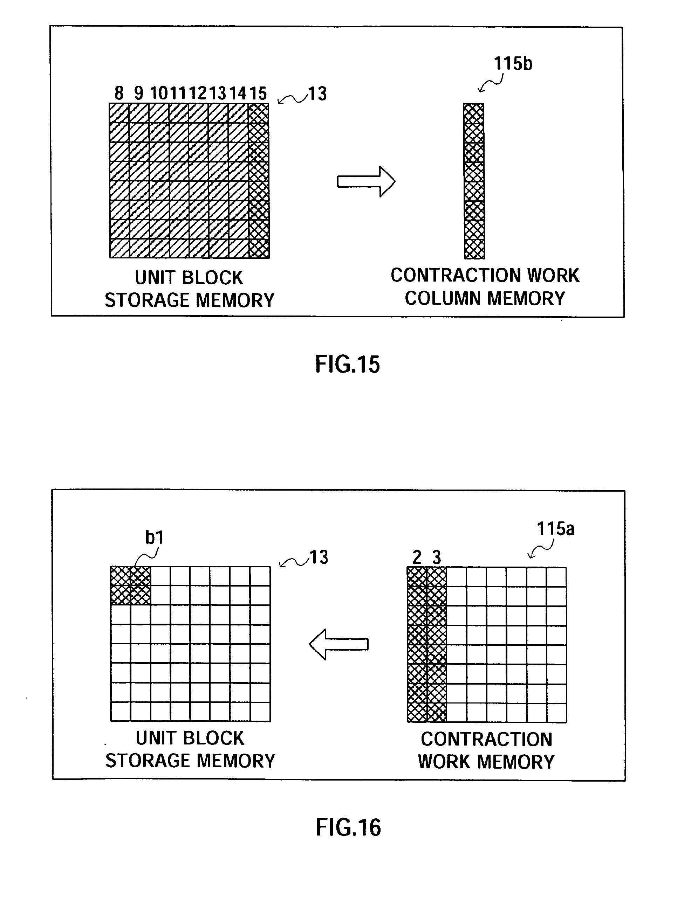

Here, as shown in FIG.15, for contractionprocessing at the next block (unit block B2 before contraction), the rightmost line before contraction of the unit block B1 this time stored in the unit block storage memory 13 is stored in the contraction work column memory 115b.

Next, as in the case of the previous block, the contracted image data in the horizontal direction stored in the contraction work memory 115a is subjected as shown in FIG.16 to contraction processing only in the vertical direction wherever possible within the block using a bilinear interpolation method and the result is stored in the unit block storage memory 13. Thus, the contraction unit block b1 which is the result of contracting the unit block B1 is stored in the unit block storage memory 13.

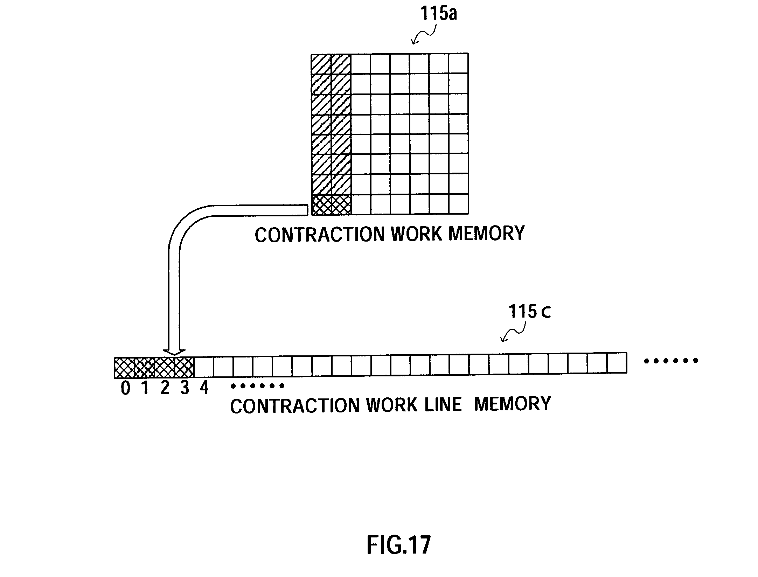

Here, as shown in FIG.17, being necessary for contraction processing of the subsequent blocks, the bottom line before contraction is stored in the contraction work line memory 115c. Next, the format transformation section 16 transforms the image data after contraction stored in the unit block storage memory 13 into an output format of 5, 6 and 5 bits for RGB respectively and stores the transformation result in the displaymemory 17. The above described processing is repeated hereafter. Then, the processing on the block after the processing on one horizontal line consisting of unit blocks of 8 $\times$ 8 pixels is completed, that is, processing on the 160th block will be explained.

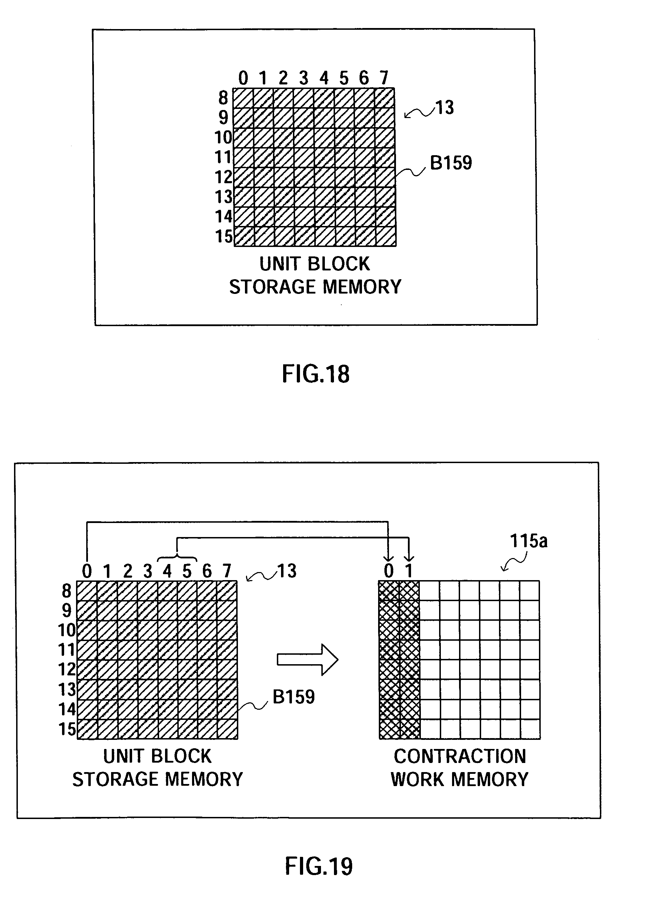

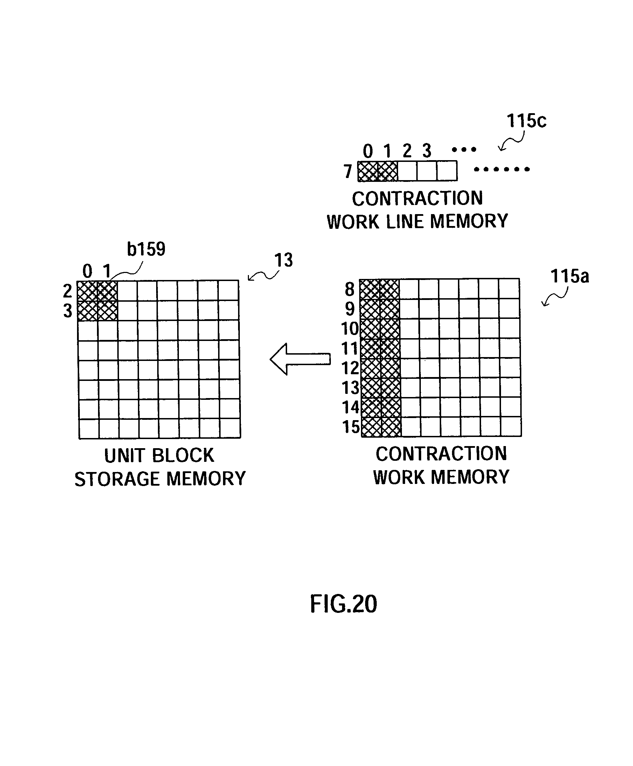

As shown in FIG.18, the unit block decoding section 12 decodes the compressed data (JPEG data) stored in the compressed data memory 11 first and then outputs the 160th 8 $\times$ 8 pixel unit block B159 to the unit block storage memory 13. Next, as shown in FIG. 19, the contraction processing section 14 carries out contraction processing only in the horizontal direction wherever possible within the block on the image data stored in the unit block storage memory 13 using a bilinear interpolation method and stores the result in the contraction work memory 115a. This processing is similar to the above described processing on the unit block B0 shown in FIG.8. Next, in the case of contraction in the vertical direction (column), the processing shown in FIG.20 will be carried out using the image data stored in the contraction work line memory 115c described in FIG.11 when the first 8 $\times$ 8 pixel unit block B0 is processed.

That is, as described in FIG.11, the bottom line (7th line) data which is the result of the contraction processing in the horizontal direction on the first neighboring unit block B0 on the unit block B159 processed this time is stored in the contraction work line memory 115c.

Then, using the data stored in the contraction work line memory 115c and the contracted image data in the horizontal direction stored in the contraction work memory 115a at this time, contraction processing only in the vertical direction wherever possible within the block is carried out using a bilinear interpolation method and the result is written back in the unit block storage memory 13. In this case, since this is a contraction from 1280 $\times$ 960 pixels to 320 $\times$ 240 pixels as described above, the contraction rate in the vertical direction is 959/239 and within the 8 $\times$ 8-pixel unit block B159, it is possible to output horizontal two lines as shown below.

That is, with regard to the top line (2nd line of the contracted image) after contraction (contraction unit block b159), N=8. 019 is obtained by substituting n=2 into the relationship between the position N of the line before contraction and the position n of the line after contraction (959/239) $\times$ n=N based on the contraction rate in the vertical direction as in the case of the horizontal direction and the data assigned to the 2nd line after contraction processing is obtained by interpolating the 7th line before contraction (data stored in the contraction work line memory 115c) and the 8th line (top line of the result of compressing the unit block B159 processed this time in the horizontal direction) using a bilinear interpolation method.

Furthermore, with regard to the 2nd line (3rd line of the contracted image) from the top after contraction (contraction unit block b159), N=12.038 is obtained by substituting n=3 into the relationship (959/239) $\times$ n=N between the position N of the line before contraction and the position n of the line after contraction based on the contraction rate in the vertical direction as in the case of the horizontal direction and the data assigned to this 2nd line after contraction processing is obtained by interpolating the 12th line before contraction and the 13th line (4th line and 5th line from the top line of the result of compressing the unit block B159 processed this time in the horizontal direction) using a bilinear interpolation method. In this case, being also necessary for contraction processing of the subsequent blocks, the bottom line before contraction is stored in the contraction work line memory 115c.

In this way, the contraction unit block b159 made up of the contracted unit block B159 (FIG.18) is stored in the unit block storage memory 13. Then, in this condition, the format transformation section 16 transforms the image data (contraction unit block b159) after contraction stored in the unit block storage memory 13 into an output format of 5, 6 and 5 bits for RGB respectively and stores the transformed data in the display memory 17. Hereafter, the above described processing is repeated until processing of all image data is completed.

As shown above, when an image is contracted, the image transformation apparatus 100 only needs to provide the contraction work memory 115a capable of storing an amount of data of one unit block before contraction, the contraction work column memory 115b capable of storing data corresponding to one column of the unit block and the contraction work line memory 115c capable of storing data corresponding to one line of the image after contraction without using the work buffer 15 (FIG.4) corresponding in image size to one screen of the input data as in the conventional case, and can thereby drastically reduce the volumes of these work memories necessary for contraction processing.

Then, this image transformation apparatus 100 carries out contraction processing for each unit block, outputs the contraction unit block whose contraction processing is completed to the display memory 17 and carries out contraction processing on a new unit block, and can thereby eliminate the necessity of increasing the volumes of the work memories even if the size of the image before contraction increases.

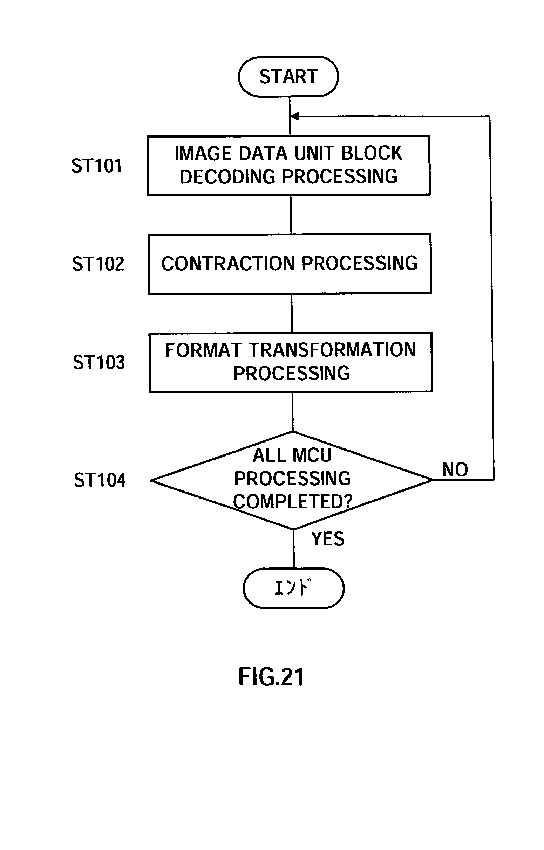

Next, the image transformation method of the present invention will be explained. FIG.21 is a flow chart showing the operation of the image transformation method of the present invention.

In FIG.21, step ST101 is a step of carrying out image data unit block decoding processing in which digitized image data is decoded and output for each unit. Furthermore, step ST102 is a step of carrying out the above described contraction processing in FIG. 7 to FIG. 20 in which image data for each unit obtained through the image data unit block decoding processing (step ST101) is contracted. Step ST103 is a step of carrying out format transformation processing in which the image data after contraction obtained in the contraction processing (step ST102) is transformed according to the display format.

Then, step ST104 is a step of deciding whether the processing on all unit blocks (unit called "MCU: Minimum Coded Unit" in the case of JPEG and "macro block" in the case of MPEG) in steps ST101 to ST103 has been completed or not and a negative result here means that the processing is in progress and at this time, the image transformation apparatus 100 returns to step ST101 and repeats the same processing. When the processing on all unit blocks is completed, a positive result is obtained in step ST104 and this processing procedure is completed.

As shown above, this embodiment reduces necessary work memory drastically, reduces the chip area and can thereby reduce the cost and size of the apparatus. In the case of this embodiment, the work memory used is reduced from 3,225,600 bytes to 769,248 bytes in the conventional method, achieving a reduction of memory of approximately 76%.

The explanations so far have described the case where the compression format is JPEG, a contraction is performed from 1280 × 960 pixels to 320 × 240 pixels, the output format is 5, 6 and 5 bits for RGB respectively and the contraction method is a bilinear interpolation method, but it goes without saying that the present invention is also applicable to any data type, compression format, contraction pattern, output format or contractionmethod. The data type in this case can be multi-value image, binary image, etc., the compression format can be JPEG, MPEG, etc., the output format can be binary image, halftone pseudo-gradation image, etc., and the contraction method can be a bilinear interpolation method, nearest-neighbor interpolation method, etc.

Furthermore, the image transformation apparatus 100 of the present invention can implement a radio communication terminal which stores only contracted decoded images by performing contraction simultaneously with decoding of compressed data for each minimum unit. This makes it possible to reduce the size of the apparatus, reduce the cost and achieve power saving.

Furthermore, it is also possible to record an image transformation program which has programmed the image transformation method shown in FIG.21 in a recording medium. In this case, as the recording medium, for example, a semiconductor memory, magnetic recording apparatus, optical recording apparatus or magneto-optical recording apparatus can be used.

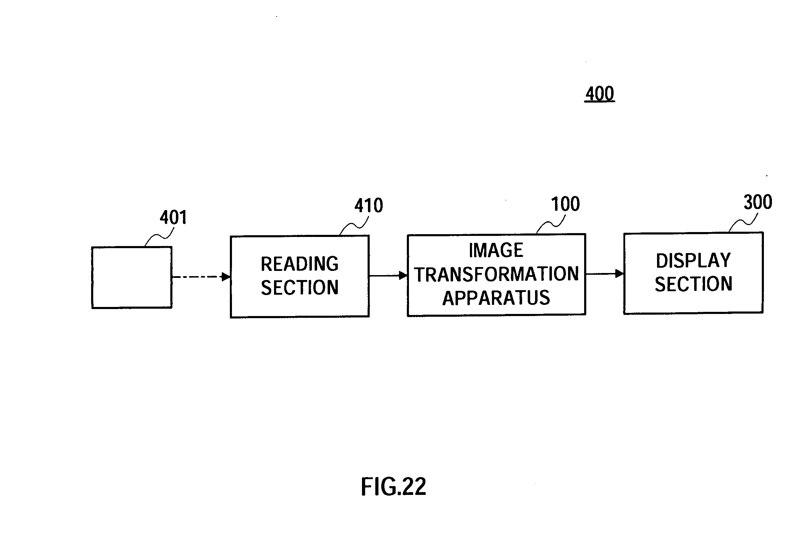

Furthermore, the aforementioned embodiment has described the apparatus which downloads compressed data through a communication as the portable terminal apparatus 200 (FIG.5) including the image transformation apparatus 100, but the present invention is not limited to this, and the image transformation apparatus 100 of the present invention is also applicable to a portable terminal apparatus 400 shown in FIG.22 which reads compressed data from a memory card 401 storing the compressed data (compressed image data) through a reading section 410, decodes this read compressed data and carries out contraction processing. In this case, the portable terminal apparatus also stores only contracted image data, and can thereby reduce the size of the apparatus, reduce the cost and achieve power saving.

As explained above, the present invention carries out contraction processing on an input image for each unit block, and can thereby implement an image transformation apparatus which drastically reduces the work memory used compared to the conventional case, prevent the work memory used from increasing no matter how large the input image size may be and thereby realize a cost reduction and memory saving.

Furthermore, the present invention carries out contraction processing on an input image for each unit block, and can thereby contract the image to an arbitrary size and carry out decoding processing without increasing the necessary memory even if the image size of the input compressed data increases.

This application is based on the Japanese Patent Application No.2002-325912 filed on November 8, 2002, entire content of which is expressly incorporated by reference herein.

Industrial Applicability

The present invention is applicable to an image transformation apparatus, image transformation method and recording medium, etc.

**Claims**

1. An image transformation apparatus comprising a contraction processing section that carries out contraction processing on unit image data extracted for each predetermined unit block, for each unit thereof, wherein said contraction processing section outputs the contracted image data subjected to said contraction processing and then performs said contraction processing on new unit image data.

2. An image transformation apparatus comprising:

   a compressed data memory that stores compressed image data;
   an image data unit block decoding section that decodes and outputs the image data stored in said compressed data memory;
   a unit block storage memory that stores the image data for each unit block output from said image data unit block decoding section;
   a contraction processing section that contracts the image data for each unit recorded in said unit block storage memory;
   a contraction processing memory that stores the contracted image data output from said contraction processing section;
   a work memory that stores temporary information at said contraction processing section;
   a format transformation section that transforms the contracted image data recorded in said contraction processing memory according to a display format; and
   a display memory that stores the image data transformed according to said display format.

3. A terminal apparatus comprising an image transformation apparatus that carries out contraction processing on unit image data extracted for each predetermined unit block, for each unit thereof, outputs the image data subjected to said contraction processing and then carries out said contraction processing on new unit image data.

4. The terminal apparatus according to claim 3, wherein only contracted image data is stored.

5. An image transformation method comprising:

   an image data unit block decoding step of decoding and outputting digitized image data for each unit;
   a contraction processing step of contracting image data for each unit obtained in said image data unit block decoding step; and
   a format transforming step of transforming the contracted image data obtained in said contraction processing step according to a display format.

6. A recording medium that stores an image transformation processing program comprising:

   an image data unit block decoding step of decoding and outputting digitized image data for each unit;
   a contraction processing step of contracting image data for each unit obtained in said image data unit block decoding step; and
   a format transforming step of transforming the contracted image data obtained in said contraction processing step according to a display format.

p1

g11    g12

g14    g13

IMAGE BEFORE
CONTRACTION

g1

IMAGE AFTER
CONTRACTION

FIG.1

FIG.2

FIG.3

EP 1 523 170 A1

10

| 11 | 13 | 17 |
|---|---|---|
| COMPRESSED DATA MEMORY | UNIT BLOCK STORAGE MEMORY | DISPLAY MEMORY |

| 12 | 14 | 16 |
|---|---|---|
| UNIT BLOCK DECODING SECTION | CONTRACTION PROCESSING SECTION | FORMAT TRANSFORMATION SECTION |

15

WORK BUFFER CORRESPONDING IN IMAGE SIZE TO ONE SCREEN OF INPUT DATA

FIG.4

EP 1 523 170 A1

200

201

210

100

220

| COMMUNICATION PROCESSING SECTION | → | IMAGE TRANSFORMATION APPARATUS | → | DISPLAY SECTION |

FIG.5

COMPRESSED
DATA →

11
COMPRESSED DATA
MEMORY

13
UNIT BLOCK
STORAGE MEMORY

17
DISPLAY MEMORY → (DISPLAY SECTION)

12
UNIT BLOCK
DECODING SECTION

14
CONTRACTION
PROCESSING
SECTION

16
FORMAT
TRANSFORMATION
SECTION

115a
CONTRACTION WORK
MEMORY

115b
CONTRACTION WORK
COLUMN MEMORY

115c
CONTRACTION WORK
LINE MEMORY

100

FIG.6

0 1 2 3 4 5 6 7

0
1
2
3
4
5
6
7

~13

B0

UNIT BLOCK STORAGE MEMORY

**FIG.7**

0 1 2 3 4 5 6 7 ~13

B0

115a

0 1

0
1
2
3
4
5
6
7

UNIT BLOCK
STORAGE MEMORY

CONTRACTION
WORK MEMORY

**FIG.8**

0 1 2 3 4 5 6 7 ～13
B0

UNIT BLOCK
STORAGE MEMORY

115b

CONTRACTION WORK
COLUMN MEMORY

**FIG.9**

b0
0 1 ～13
0
1

UNIT BLOCK
STORAGE MEMORY

115a
0 1

CONTRACTION
WORK MEMORY

**FIG.10**

EP 1 523 170 A1

115a

0
1
2
3
4
5
6
7

CONTRACTION WORK MEMORY

115 c

0 1 2 3 4 • • • • • •

CONTRACTION WORK LINE MEMORY

FIG.11

B0  B1                                    B157  B158

B159

b0  b1              b157
                              b158
b159

FIG.12

8 9 10 11 12 13 14 15

0
1
2
3
4
5
6
7

~13

B1

UNIT BLOCK STORAGE MEMORY

FIG.13

7    115b    8 9 10 11 12 13 14 15    2 3    115a

~13

B1

CONTRACTION
WORK COLUMN
MEMORY

UNIT BLOCK
STORAGE
MEMORY

CONTRACTION
WORK MEMORY

FIG.14

8 9 10 11 12 13 14 15 ～13

115b

UNIT BLOCK
STORAGE MEMORY

CONTRACTION WORK
COLUMN MEMORY

FIG.15

b1

～13

115a

2 3

UNIT BLOCK
STORAGE MEMORY

CONTRACTION
WORK MEMORY

FIG.16

EP 1 523 170 A1

115a

CONTRACTION WORK MEMORY

115 c

0 1 2 3 4 • • • • • •  CONTRACTION WORK LINE  MEMORY

FIG.17

**FIG.18**

**FIG.19**

115c

0 1 2 3 • • •

7 CONTRACTION
WORK LINE MEMORY

b159

0 1
2
3
13

UNIT BLOCK
STORAGE MEMORY

8
9
10
11
12
13
14
15
115a

CONTRACTION
WORK MEMORY

FIG.20

START

ST101 | IMAGE DATA UNIT BLOCK DECODING PROCESSING

ST102 | CONTRACTION PROCESSING

ST103 | FORMAT TRANSFORMATION PROCESSING

ST104 | ALL MCU PROCESSING COMPLETED?

NO

YES

エンド

FIG.21

```
        401              410              100              300
       ┌──────┐      ┌──────────┐   ┌──────────────┐  ┌──────────┐
       │      │- - ->│ READING  │──>│    IMAGE     │─>│ DISPLAY  │
       │      │      │ SECTION  │   │TRANSFORMATION│  │ SECTION  │
       │      │      │          │   │  APPARATUS   │  │          │
       └──────┘      └──────────┘   └──────────────┘  └──────────┘
```

**FIG.22**

EP 1 523 170 A1

<table>
<tr><td colspan="2"><b>INTERNATIONAL SEARCH REPORT</b></td><td>International application No.<br>PCT/JP03/14172</td></tr>
</table>

| A. CLASSIFICATION OF SUBJECT MATTER |
|---|
| Int.Cl⁷ H04N1/393 |

According to International Patent Classification (IPC) or to both national classification and IPC

| B. FIELDS SEARCHED |
|---|
| Minimum documentation searched (classification system followed by classification symbols)<br>  Int.Cl⁷ H04N1/393 |

Documentation searched other than minimum documentation to the extent that such documents are included in the fields searched

| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

| C. DOCUMENTS CONSIDERED TO BE RELEVANT |

| Category* | Citation of document, with indication, where appropriate, of the relevant passages | Relevant to claim No. |
|---|---|---|
| X | JP 9-55851 A (NEC Corp.), | 1,3-6 |
|   | 25 February, 1997 (25.02.97), | |
| Y | Full text; Figs. 1 to 5 | 2 |
|   | (Family: none) | |
| Y | JP 2002-262058 A (Fuji Photo Film Co., Ltd.), | 1-6 |
|   | 13 September, 2002 (13.09.02), | |
|   | Full text; Figs. 1 to 8 | |
|   | & EP 1237122 A2 | |
| Y | JP 9-18698 A (Canon Inc.), | 1-6 |
|   | 17 January, 1997 (17.01.97), | |
|   | Full text; Figs. 1 to 6 | |
|   | (Family: none) | |

| ☒ Further documents are listed in the continuation of Box C. | ☐ See patent family annex. |

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>  04 December, 2003 (04.12.03) | Date of mailing of the international search report<br>  16 December, 2003 (16.12.03) |
|---|---|
| Name and mailing address of the ISA/<br>  Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP03/14172

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2001-94791 A  (Hitachi Kokusai Electric Inc.), 06 April, 2001 (06.04.01), Full text; Figs. 1 to 21 (Family: none) | 1-6 |

Form PCT/ISA/210 (continuation of second sheet) (July 1998)